# EUROPÄISCHE PATENTSCHRIFT

(11) **EP 0 574 675 B1**
(45) Veröffentlichungstag und Bekanntmachung des Hinweises auf die Patenterteilung: **04.10.1995**
(21) Anmeldenummer: 93106615.3
(22) Anmeldetag: 12.05.1990
(51) Int. Cl.: B01J 8/12, B01D 53/08

(54) **Wanderbettreaktoranlage**
Moving bed reactor installation
Installation de réacteur à lit mouvant

(30) Priorität: 19.05.1989 DE 3916325
(43) Veröffentlichungstag der Anmeldung: 22.12.1993
(62) Teilanmeldung aus: 90907061.7
(73) Patentinhaber: GROCHOWSKI, Horst, D-46117 Oberhausen (DE)
(72) Erfinder: GROCHOWSKI, Horst, D-46117 Oberhausen (DE)
(74) Vertreter: Schumacher, Horst, Dr. Dipl.-Phys.

(56) Entgegenhaltungen:
- WO-A-88/08746
- US-A- 2 519 874
- US-A- 2 550 955

## Beschreibung

Die Erfindung betrifft eine Wanderbettreaktoranlage zum Behandeln von Fluiden mittels eines als Schüttgut vorliegenden Feststoffes, vorzugsweise im Gegenstromverfahren, nach dem Oberbegriff des Anspruchs 1. Derartige Wanderbettreaktoranlagen sind bekanntermaßen für Reinigungsprozesse von Fluiden, bei denen eine oder mehrere der Fluidkomponenten an dem Schüttgut adsorbiert werden, aber auch für katalytische Reaktionen und viele weitere Prozesse verwendbar. In diesem Sinne ist unter "Behandeln" von Fluiden eine sehr umfangreiche Palette von Anwendungsmöglichkeiten zu verstehen.

Wanderbettreaktoranlagen der eingangs genannten Art sind aus der DE-883 598-C bekannt. Bei diesen bekannten Wanderbettreaktoranlagen durchwandert ein einziges Schüttgut sämtliche übereinanderliegenden Reaktionskammern nacheinander. Zu diesem Zweck ist oberhalb der obersten Reaktionskammer ein Schüttgutverteilbunker und unterhalb der untersten Reaktionskammer ein Schüttgutsammler angeordnet. Mit diesen bekannten Wanderbettreaktoranlagen sind nur ganz spezielle Fluidbehandlungen möglich, da hinsichtlich der Schüttgutzuteilung und des Schüttgutabzuges sogut wie keine Flexibilität gegeben ist.

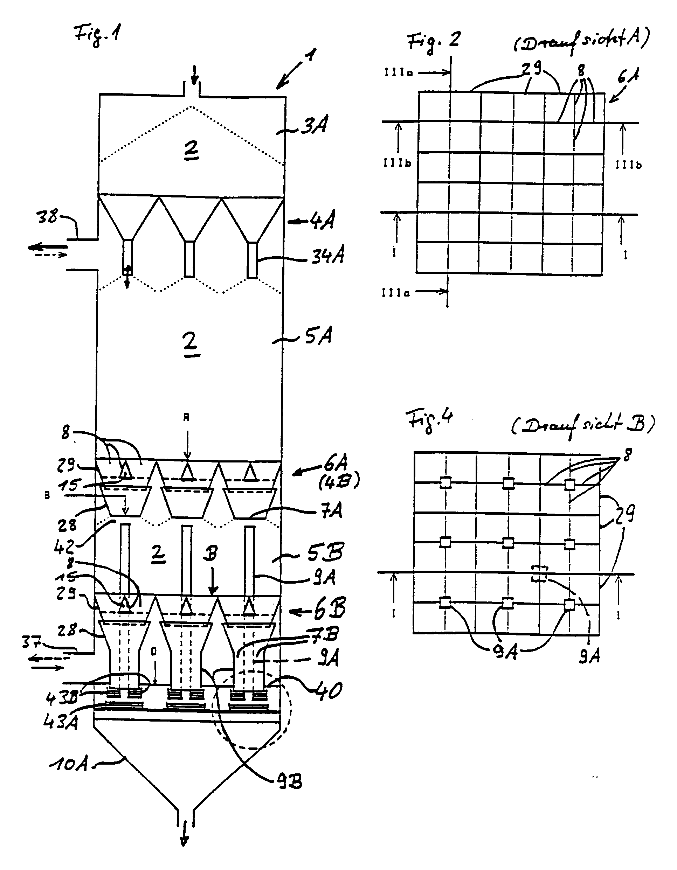

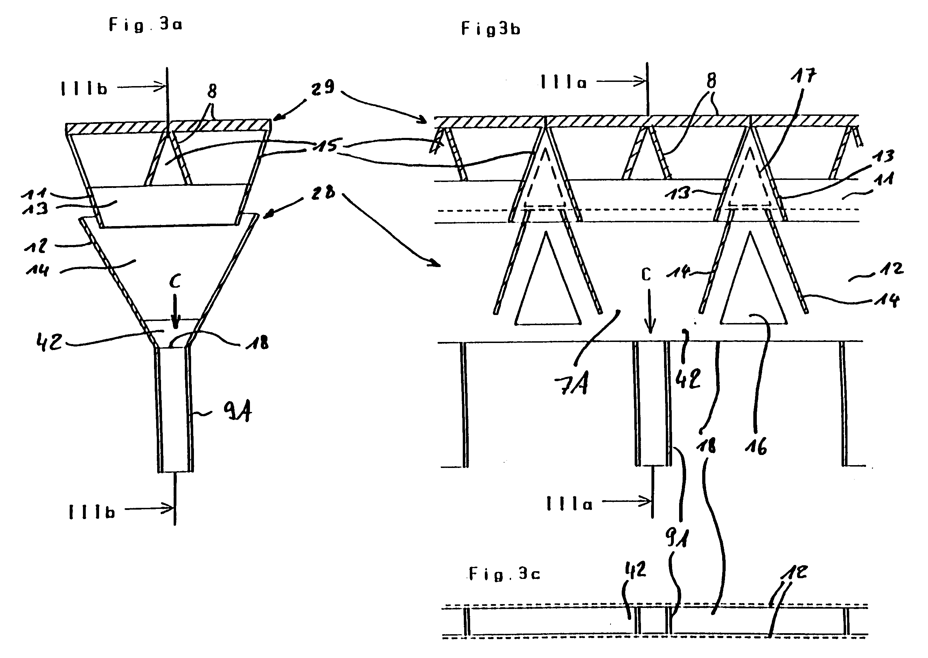

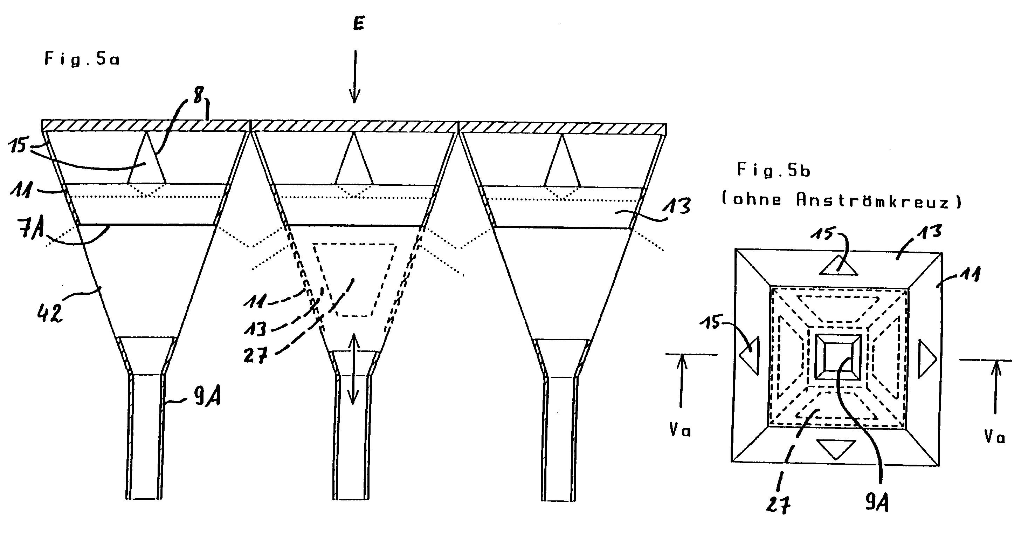

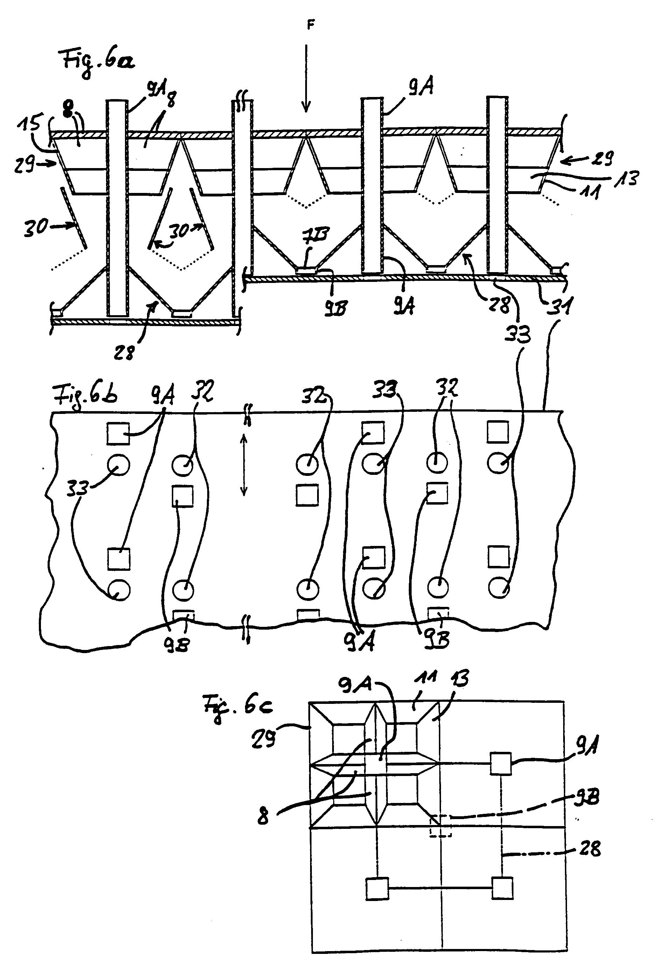

Aus der WO88/08746 des Anmelders ist ein Boden für Wanderbettreaktoranlagen bekannt, bei dem entweder einzelne Trichtermodule (Fig. 3, 4) in ein Tragrahmenwerk eingesetzt werden (Fig. 1) oder bei dem lange Rinnen (Fig. 5, 6) anstelle von Trichtern vorgesehen sind, in welche dachähnliche Verteilelemente eingebaut sind. Erstere sind aufwendig, letztere in ihrem Schüttgutabzugsverhalten problematisch.

Davon ausgehend liegt der Erfindung die Aufgabe zugrunde, Wanderbettreaktoranlagen der eingangs genannten Art zu verbessern. Insbesondere ist eine größere Flexibilität bei der Schüttgutzuteilung in bzw. beim Schüttgutabzug aus übereinanderliegenden Reaktionskammern erwünscht.

Diese Aufgabe wird durch die Merkmale des Anspruchs 1 gelöst.

Durch die Erfindung wird u. a. der Vorteil erreicht, daß die Bauhöhe bzw. das Gewicht einer erfindungsgemäßen Wanderbettreaktoranlage vergleichsweise gering sind. Ebenso können relativ große Anströmflächen auf einen vergleichsweise kleinen Raum und insbesondere auf einer sehr kleinen Grundfläche untergebracht werden. Gleichwohl ist eine vergleichsweise sehr gleichmäßige Schüttgutverteilung bzw. ein sehr gleichmäßiger Schüttgutabzug zu bzw. von den einzelnen Reaktionskammern möglich. Insbesondere ist es möglich, das Schüttgut oder die Schüttgüter im wesentlichen planparallel durch die einzelnen Reaktionskammern zu führen. Ebenso kann auch das Fluid in sehr gleichmäßiger Verteilung und insbesondere mit im wesentlichen gleicher Verweildauer durch die Schüttgutschichten in den einzelnen Reaktionskammern geführt werden.

Zweckmäßige Ausgestaltungen des Erfindungsgegenstandes, die insbesondere ein sehr gleichmäßiges Hindurchführen der Schüttgutpartikel durch die verschiedenen Reaktionskammern sowie eine raumsparende Schüttgutzufuhr zu bzw. Schüttgutabfuhr von der Wanderbettreaktoranlage sowie eine flexible Einsetzbarkeit für verschiedenste Arten von Fluidbehandlungen und verschiedenen Reaktionsbedingungen in insbesondere platzsparender Weise gewährleisten, sind in weiteren Ansprüchen enthalten.

Die erfindungsgemäß zu verwendenden Bauteile bzw. Verfahrensschritte unterliegen in ihrer Größe, Formgestaltung, Materialauswahl und technischen Konzeption bzw. den Verfahrensbedingungen keinen besonderen Ausnahmebedingungen, so daß die in dem jeweiligen Anwendungsgebiet bekannten Auswahlkriterien uneingeschränkt Anwendung finden können; insbesondere sind sie auch unabhängig voneinander zur Lösung der Aufgabe oder zumindest einer Teilaufgabe vorteilhaft verwendbar.

Weitere Einzelheiten, Merkmale und Vorteile des Gegenstandes der Erfindung ergeben sich aus der nachfolgenden Beschreibung der zugehörigen Zeichnung, in der bevorzugte Ausführungsformen einer erfindungsgemäßen Wanderbettreaktoranlage beispielhaft dargestellt sind. In der Zeichnung zeigen:
- Fig. 1: eine Wanderbettreaktoranlage im Vertikalschnitt entlang der Linie I-I gemäß Fig. 2 in schematisierter Darstellung;
- Fig. 2: von derselben Wanderbettreaktoranlage eine Draufsicht auf den oberen Anströmboden (Draufsicht A gemäß Fig. 1);
- Fig. 3a: von derselben Wanderbettreaktoranlage einen Vertikalschnitt durch ein einzelnes Modul des oberen Anströmbodens entlang der Linie IIIa-IIIa gemäß Fig. 2;
- Fig. 3b: von demselben Wanderbettreaktor einen weiteren Vertikalschnitt durch den oberen Anströmboden entlang der Linie IIIb-IIIb gemäß Fig. 2;
- Fig. 3c: von demselben Wanderbettreaktor eine Draufsicht auf eine untere Rinne des oberen Anströmbodens (Draufsicht C gemäß Fig. 3a/b));
- Fig. 4: von demselben Wanderbettreaktor eine Draufsicht auf den unteren Anströmboden (Draufsicht B gemäß Fig. 1);
- Fig. 5a: einen weiteren Anströmboden im Vertikalschnitt (entlang Fig. 3a) - ausschnittsweise und in zwei alternativen Ausgestaltungen;
- Fig. 5b: von demselben Anströmboden eine Draufsicht auf das mittlere Modul, aber ohne Anströmkreuz (Draufsicht E gemäß Fig. 5a);
- Fig. 6a: ein weiterer Anströmboden in zwei alternativen Ausgestaltungen im Vertikalschnitt (entsprechend der Darstellung in Fig. 3a);
- Fig. 6b: von demselben Anströmboden die Schüttgutaustragsvorrichtung in Draufsicht (entsprechend Draufsicht F gemäß Fig. 6a) sowie
- Fig. 6c: von demselben Anströmboden eine Draufsicht (Draufsicht F gemäß Fig. 6a).

In Fig. 1 ist eine Wanderbettreaktoranlage 1 dargestellt, die zum Behandeln beliebiger, vorzugsweise gasförmiger Fluide dient und die mit einem einzigen Schüttgut 2 im Gegenstromverfahren betrieben wird. Natürlich ist grundsätzlich - wie auch bei allen nachfolgend beschriebenen Wanderbettreaktoranlagen - ein Betreiben im Gleichstromverfahren möglich, indem lediglich die Strömungsrichtung des Fluides in entgegengesetzte Richtung geändert wird.

Das Schüttgut 2 gelangt über einen Vorratsbunker 3A mit einem Schüttgutverteilboden 4A und ggf. Schüttgutzuteilrohre 34A, die zur Erzielung unterschiedlicher Betthöhen auch höhenverstellbar sein können (wie mit Doppelpfeil angedeutet), in eine erste (obere) Reaktionskammer 5A. Am unteren Ende der Reaktionskammer 5A befindet sich ein Boden, insbesondere ein Anströmboden 6A. Dieser Boden hat eine Mehrfachfunktion: Erstens dient er dazu, das in der Reaktionskammer 5A zu behandelnde Fluid auf die Grundrißfläche der Reaktionskammer 5A gleichmäßig zu verteilen; durch ihn wird also das Fluid in der Reaktionskammer 5A eingelassen, sofern - wie bevorzugt - die Wanderbettreaktoranlage im Gegenstromverfahren betrieben wird. Zweitens dient der Boden 6A dem Auslaß des Schüttgutes aus der Reaktionskammer 5A nach unten. Drittens dient der Boden 6A als Schüttgutverteilboden (4B) zum Verteilen des Schüttgutes über den Querschnitt der darunter liegenden Reaktionskammer 5B. Der Boden 6A wie auch der noch zu beschreibende (darunter liegende) Boden 6B sind vorzugsweise in der gleichen Weise aufgebaut, wie dies in der WO88/08746 des Anmelders beschrieben worden ist; d. h. daß er aus mindestens einem, vorzugsweise aber mehreren nebeneinander angeordneten rinnenförmigen Elementen 28 und/oder 29, vorzugsweise in Modulbauweise, gebildet ist, wobei diese Elemente jeweils eine oder mehrere mit Abstand zueinander angeordnete Schüttgutdurchlaßöffnungen 7A aufweisen. Der Übersichtlichkeit halber sind in Fig. 1 lediglich Trichter (Doppeltrichter 28, 29) erkennbar, während die Rinnen im Zusammenhang mit Fig. 3a bis 3c noch erläutert werden sollen.

Unabhängig davon, ob einfache Trichter 29 oder jeweils zwei untereinander angeordnete Trichter 29 und 28 (Doppeltrichter) verwendet werden, weist der jeweils obere (bzw. einzige) Trichter 29 eines Moduls dachförmige Verteilelemente 8 auf, deren Ausgestaltungsmöglichkeiten sich im einzelnen aus der WO88/08746 ergeben (siehe auch Fig. 6c).

Das Schüttgut gelangt über die Schüttgutdurchlaßöffnungen 7A des Anströmbodens 6A sowohl in die untere Reaktionskammer 5B als auch in die mit Abstand unterhalb der Schüttgutdurchlaßöffnungen 7A und konzentrisch zu diesen angeordneten Schüttgutabzugsrohre 9A. Die Schüttgutabzugsrohre 9A sind im wesentlichen senkrecht nach unten durch die Reaktionskammer 5B sowie durch den zugehörigen Anströmboden 6B hindurchgeführt. Auf diese Weise kann das den oberen Anströmboden 6A nach unten verlassende Schüttgut in die oben offenen Schüttgutabzugsrohre 9A hineingelangen und an deren unterem Ende kontinuierlich oder absatzweise abgezogen werden.

Der (untere) Anströmboden 6B ist im wesentlichen in gleicher Weise wie der (obere) Anströmboden 6A aufgebaut, wobei die im Grundriß gleich großen Trichtermodule vertikal fluchtend unter den darüberliegenden Modulen des (oberen) Anströmbodens 6A angeordnet sind. Der (untere) Anströmboden 6B hat die Aufgabe, erstens das von unten der Wanderbettreaktoranlage zugeführte Fluid gleichmäßig über den Querschnitt der (unteren) Reaktionskammer 5B zu verteilen und zweitens das Schüttgut aus der Reaktionskammer 5B über Schüttgutdurchlaßöffnungen 7B nach unten durchzulassen.

Die Trichter der Anströmböden der übereinanderliegenden Reaktionskammern können aber auch afu Lücke versetzt zueinander angeordnet sein, z. B. um eine über den Reaktionskammerquerschnitt vergleichmäßigte Betthöhe in der tiefer gelegenen Reaktionkammer zu erhalten. Dies ist in der Zeichnung nicht eigens dargestellt, da aus der WO87/00768 des Anmelders grundsätzlich bereits bekannt.

Das die Reaktionskammer 5B nach oben über die punktiert gezeichneten Schüttgutkegel sowie die Schüttgutdurchlaßöffnungen 7A verlassende Fluid durchströmt also in einer Reihenschaltung beide Reaktionskammern 5B und 5A nacheinander.

Am unteren Ende der Wanderbettreaktoranlage 1 befindet sich ein Schüttgutsammeltrichter 10A, an dessen unterem Ende das Schüttgut aus beiden Reaktionskammern aus der Wanderbettreaktoranlage abgeführt werden kann. Zu diesem Zweck können die Schüttgüter aus beiden Reaktionskammern gemeinsam im Schüttgutsammeltrichter 10A gesammelt werden. In der Regel wird man jedoch daran interessiert sein, die Schüttgüter aus den beiden übereinanderliegenden Reaktionskammern getrennt voneinander aus der Wanderbettreaktoranlage abzuführen. Für diesen Fall ist es erforderlich, voneinander unabhängig tätigbare Schüttgutaustragsvorrichtungen 43A und 43B unterhalb des (unteren) Anströmbodens 6B vorzusehen.

Die Ausführungsform nach Figur 1 eignet sich u. a. für Adsorptionsprozesse von unerwünschten Bestandteilen aus den Abgasen von Müllverbrennungsanlagen, aus denen z. B. sowohl Schwermetalle, insbesondere Quecksilber einerseits und z. B. Schwefel- oder Stickstoffoxide andererseits entfernt werden. Die Schwermetalladsorption findet dann in der unteren Reaktionskammer statt, während das so vorgereinigte Abgas in der oberen Reaktionskammer von den unerwünschten Gaskomponenten ganz oder teilweise befreit wird. In die untere Reaktionskammer gelangt dabei stets ein Adsorptionsmittel, das bereits mit den erwähnten gasförmigen Komponenten vorbeladen ist, während der oberen Reaktionskammer vorzugsweise frisches oder regeneriertes Schüttgut zugeführt wird. Es hat sich gezeigt, daß das in der oberen Reaktionskammer vorbeladene Schüttgut für die Adsorptionsvorgänge in der unteren Reaktionskammer häufig besonders geeignet sind - wie vorerwähnt beispielhaft beschrieben. Durch die Möglichkeit eines getrennten Schüttgutabzuges aus beiden übereinanderliegenden Reaktionskammern können sehr unterschiedliche Verweilzeiten bzw. Wandergeschwindigkeiten der Schüttgüter in den beiden Reaktionskammern realisiert werden. Da die Abzugszyklen für Schüttgut für die beiden Reaktionskammern in der Regel voneinander verschieden sind, können die beiden unterschiedlich beladenen Schüttgüter auch getrennt voneinander gesammelt und aus dem Sammeltrichter 10A getrennt voneinander abgeführt werden.

In Fig. 2 ist der Grundriß des (oberen) Anströmbodens 6A in Draufsicht dargestellt. Er besteht in dem dargestellten Beispiel aus neun dicht neben- und hintereinander angeordneten, mit durchgezogenen Linien dargestellten Trichtermodulen. Jedes Trichtermodul weist über kreuz angeordnete dachförmige Verteilelemente 8 auf, von denen der Übersichtlichkeit halber lediglich die strichpunktierten Dachfirste dargestellt sind.

Aus Fig. 3a bis 3c ist nun der Grundgedanke des Zusammenfassens der Trichterelemente einer Reihe zu einer Rinne erkennbar. Er ist auch für andere Anströmböden verwendbar. Jede Rinne gemäß Fig. 3a bis 3c weist parallel zueinander verlaufende, nach unten konisch leicht zusammenlaufende Seitenwände 11 für die oberen Trichter 29 und 12 für die unteren Trichter 28 auf. In jede Rinne sind in Rinnenquerrichtung sich erstreckende paarweise nach unten aufeinander zulaufende Seitenwände 13 und 14 eingebaut, so daß im Grundriß quadratische Trichter entstehen. Diese Anordnung ist vergleichsweise beigesteif und in der Regel in der Lage, auch ohne zusätzliche Versteifungselemente die Druckkräfte des auf dem Anströmboden lastenden Schüttgutes aufzufangen, so daß sich ein selbsttragender Anströmboden ergibt.

Die aus den Seitenwänden 11 und 13 gebildeten oberen Trichter 29 weisen wiederum die weiter oben beschriebenen dachförmigen kreuzweise angeordneten Verteilelemente 8 auf. Dort, wo diese Verteilelemente an die Seitenwände 11 und 13 anschließen, decken sie dreiecksförmige Fluiddurchtrittsöffnungen 15 ab, die in den Seitenwänden 11 und 13 vorgesehen sind. In den Zwikelflächen zwischen benachbarten Trichtern einer Rinne können weitere Fluiddurchtrittsöffnungen 16 bzw. 17 vorgesehen sein, um den Widerstand für das Fluid zu vermindern; dies kann auch durch Einfügen von rohrförmigen Zwischenstücken geschehen, wie sie u. a. in Fig. 1 unter dem unteren Anströmboden vorgesehen sind.

Für die Zwecke eines oberen Anströmbodens kann der untere Spalt 18 zwischen den Seitenwänden 12 der unteren Rinne völlig offen bleiben. Lediglich im mittleren Bereich unterhalb jedes Doppeltrichtermoduls ist ein Schüttgutabzugsrohr 9A für die darüberliegende Reaktionskammer an den Seitenwänden 12 befestigt. Die genaue Höhenlage der oberen Mündungsöffnung des Schüttgutabzugsrohres 9A ist aber grundsätzlich frei wählbar - wie weiter unten noch zu erläutern.

In Fig. 4 ist die der Fig. 2 entsprechende Draufsicht B auf den (unteren) Anströmboden 6B dargestellt. Die beiden Figuren 4a und 2 unterscheiden sich lediglich dadurch, daß gemäß Fig. 4a die Schüttgutabzugsrohre 9A durch den Kreuzungspunkt der Verteilelemente 8 jedes Trichtermoduls geführt ist, wobei der vorzugsweise quadratische Querschnitt der Rohre 9A genauso groß wie die von den Verteilelementen 8 in ihrem Kreuzungsbereich abgedeckte Fläche sein kann und vorzugsweise den gleichen Querschnitt wie andere Zuteil- und Abführrohre für Schüttgut zu und von den Reaktionskammern aufweist.

Mit einem derartigen Boden gelingt es, eine im wesentlichen planparallele Schicht des Schüttgutes am unteren Ende der Schüttgutschicht aus der betreffenden Reaktionskammer auszutragen. Es ist möglich, jeweils nur diejenige Schüttgutschicht auszutragen, die für eine weitere Behandlung des Fluides nicht mehr geeignet ist, z.B. weil ihre Adsorptionskapazität erschöpft ist. Die jeweils höher liegenden Schüttgutschichten in der betreffenden Reaktionskammer sind - bei Gegenstrombetrieb - in den meisten Fällen für eine noch längere Fluidbehandlung geeignet, insbesondere nimmt bei Adsorptionsprozessen der Beladungsgrad des Schüttgutes innerhalb der Reaktionskammer von unten nach oben ab.

Wenn es hingegen gewünscht ist, jeweils das gesamte Schüttgut einer Reaktionskammer auszutauschen, so ist dies durch entsprechende Schüttgutaustragsvorrichtungen, wie sie z.B. im Zusammenhang mit Figuren 6a/b noch beschrieben werden, durchaus möglich. In beiden Fällen führt das Abziehen von Schüttgut aus einer Reaktionskammer zu einem Nachrutschen frischen Schüttgutes aus dem höher gelegenen Vorratsbunker. Dieses Nachrutschen hört von selbst auf, sobald die Spitze des sich ausbildenden Schüttgutkegels die darüber liegende Schüttguteinlaßöffnung erreicht hat.

In Figuren 5 a/b ist eine alternative Ausführungsform eines Bodens dargestellt. Bei dieser Ausführungsform sind die in Figuren 3 a/b dargestellten unteren Trichter bzw. Rinnen fortgelassen worden. Diese Ausgestaltung ist insbesondere in Verbindung mit Wanderbettreaktoren gemäß Fig. 1 als oberer Anströmboden verwendbar. Wie nämlich die punktierten oberen Begrenzungslinien des Schüttgutes zeigen, reicht die Schüttgutschicht in der unterhalb dieses Anströmbodens sich befindenden Reaktionskammer bis an die Unterkanten der Trichter. Somit können im Vergleich zu der Ausführungsform gemäß Fig. 1 geringere Bauhöhen erzielt werden. Zumindest wird aber das Gewicht und der Aufwand für die unteren Trichter oder Rinnen eingespart.

Aus Fig. 5a ist fernerhin eine besondere Anordnung der Schüttgutabzugsrohre 9A bezüglich des darügerliegenden Anströmbodens ersichtlich. Erstens ist die ober Mündungsöffnung der Schüttgutabzugsrohre 9A nach oben, insbesondere trichterförmig querschnittserweitert. Ferner ist die Schüttguteintrittsmündung der Schüttgutabzugsrohre 9 derart angeordnet, daß sie auf einer Umfangslinie einer fiktiven gradlinigen Verlängerung (gestrichelt dargestellt) der Trichter- oder Rinnenseitenwände 11 und 13 liegt. Durch jede einzelne dieser beiden Maßnahmen wird das Schüttgutabzugsverhalten durch die Schüttgutabzugsrohre 9A verbessert. Es ist lediglich in Kauf zu nehmen, daß auf diese Weise das durch die Schüttgutabzugsrohre 9A abgezogene Schüttgut mit demjenigen Fluid in Kontakt gekommen ist, das die Reaktionskammer durch deren Schüttgutschicht das Schüttgutabzugsrohr 9A geführt ist, durchströmt hat. Dies muß bei entsprechender Betthöhe in der betroffenen Reaktionskammer jedoch kein Nachteil sein. Wenn die Betthöhe ausreichend hoch ist bzw. das Schüttgut aus dieser Reaktionskammer hinreichend früh abgezogen wird, ist nämlich die Fluidbehandlung in dieser Reaktionskammer bereits abgeschlossen, wenn die Fluidströmung das Höhenniveau der - in der Regel in gleicher Ebene endenden - Schüttguteintrittsmündungen der Schüttgutabzugsrohre 9A erreicht hat. In diesen Fällen ist die Einsparung von Bauhöhe weniger bedeutsam als die Gewichts- und Aufwandseinsparung für die unteren Trichter, welche in erster Linie die Funktion haben, das Schüttgut durch eine relativ kleinflächige Schüttgutdurchlaßöffnung aus der höher gelegenen Reaktionskammer abzuführen.

In Fig. 5a ist am Beispiel des mittleren Moduls ferner gezeigt, daß das Schüttguteintrittsende der Schüttgutabzugsrohre 9A höhenveränderbar ausgestaltet sein kann. Hierdurch wird unter anderem erreicht, daß sich ändernden Prozeßbedingungen bei der Fluidbehandlung Rechnung getragen werden kann. Unter anderm wird durch diese Höhenverstellbarkeit die wirksame Betthöhe in der Reaktionskammer, durch welche diese Schüttgutabzugsrohre hindurchgeführt sind, veränderbar.

In Fig. 5a ist am Beispiel des mittleren Moduls eine weitere alternative Ausgestaltungsmöglichkeit des Anströmbodens dargestellt. Dort sind nämlich die Seitenwände 11 und 13 weiter nach unten durchgeführt als bei den übrigen Modulen (gestrichelt dargestellt). In diesen Verlängerungen der Seitenwände nach unten befinden sich umfangsverteilt Durchbrechungen 27, durch die das Schüttgut an einem bereits relativ weit oben gelegenen Punkt aus dem betroffenen Trichter seitlich austreten kann, um die unterhalb des Anströmbodens liegende Reaktionskammer mit Schüttgut zu versorgen. In diesem Fall ist es sogar möglich, daß die Schüttgutabzugsrohre 9A unmittelbar an die unteren Mündungsöffnungen der Trichter angeschlossen sind (nicht eigens dargestellt). Durch derartige Seitenwanddurchbrechungen bzw. zumindest partielle Verlängerungen der Seitenwände der Trichter nach unten, wird aber nicht nur erreicht, daß ein Teil des durch den Anströmboden geführten Schüttgutes bereits an einem relativ hoch gelegenen Punkt in die darunter liegende Reaktionskammer eintreten kann, sondern es wird auch erreicht, daß der durch die Schüttgutabzugsrohre abzuziehende Teil des Schüttgutes besonders problemlos unten abgezogen werden kann.

Fig. 5b gestattet einen Blick von oben in das mittlere Modul des Anströmbodens gemäß Fig. 5a, wobei der Übersichtlichkeit halber die dachförmigen Verteilelemente fortgelassen wurden. Auch dieser Boden ist rinnenförmig, d. h. wie in dem in Figuren 3a/b dargestellten Ausführungsbeispiel ausgestattet. Außerdem versteht es sich, daß die Durchbrechungen 27 ebenso als Randausnehmungen aus dem unteren Trichterrand ausgebildet sein können.

In Fig. 6a ist eine bezüglich Fig.1 alternative Anordnung eines Bodens dargestellt, deren Grundprinzip einer auf Lücke versetzten Anordnung zwischen den oberen und unteren Trichtern (Doppeltrichter) eines Bodens grundsätzlich für alle Böden/Anströmböden einer Wanderbettreaktoranlage geeignet ist. Das dargestellte konkrete Ausführungsbeispiel ist insbesondere für den untersten der übereinander angeordneten Anströmböden konzipiert. Die oberen Trichter oder Rinnen 29 des Anströmbodens sind in der gleichen Weise ausgebildet wie bei dem (unteren) Anströmboden 6B gemäß Fig.1, d.h. die Trichter oder Rinnen sind mit kreuzförmig angeordneten dachförmigen Verteilelementen 8 (siehe Fig.6c) und mit Fluiddurchtrittsöffnungen 15 in den Seitenwänden 11 und 13 unmittelbar unterhalb der dachförmigen Verteilelemente 8 versehen. Ferner wird jeder obere Trichter 29 im Bereich der Kreuzung der dachförmigen Verteilelemente 8 von einem Schüttgutabzugsrohr 9A aus einem höher gelegenen Reaktionsraum durchdrungen. Aus diesem Grunde und wegen der auf Lücke versetzten Anordnung zwischen den oberen Trichtern oder Rinnen 29 und den unteren Trichtern oder Rinnen 28 wird erreicht, daß die Schüttgutdurchlaßöffnungen 7B für den dargestellten (unteren) Anströmboden auf Lücke versetzt zu den unteren Mündungsöffnungen der Schüttgutabzugsrohre 9A münden, insbesondere in der gleichen Ebene mit diesen. Die auf Lücke versetzte Anordnung ergibt sich besonders deutlich aus Figuren 6b und 6c.

Wie in Fig.6a in der linken Bildhälfte dargestellt ist, können zusätzlich Zwischentrichter oder -rinnen 30 vorgesehen sein, die ähnlich ausgestaltet und angeordnet sind wie bei den aus Fig.1 sich ergebenden Doppeltrichtern. Durch diese Zwischentrichter wird unter anderem die Gleichmäßigkeit der Fluidverteilung unter den Anströmboden verbessert.

Durch die auf Lücke versetzte Trichter- bzw. Rinnenanordnung können besonders einfache Schüttgutaustragsvorrichtungen realisiert werden, z.B. in Form einer einzigen Schieberplatte 31, die unterhalb aller Schüttgutaustrittsmündungen in Richtung des in Fig.6b dargestellten Doppelpfeiles verschiebbar ist. Die Schiebeplatte 31 weist zu diesem Zweck Durchtrittsöffnungen 32 und 33 auf, die je nach Stellung wahlweise mit den Schüttgutabzugsrohren 9A (wie in Fig. 6a) oder 9B oder keinem der Schüttrohre fluchten.

In Fig. 6b ist die Schiebeplatte 31 in der Verschließposition für alle Schüttgutöffnungen dargestellt. Durch Verschieben der Schiebeplatte 31 in der Bildebene nach unten können die Durchtrittsöffnungen 32 mit den Schüttgutdurchlaßöffnungen 7B in Deckung gebracht werden. Bei entgegengesetzter Verschiebung werden die Durchtrittsöffnungen 33 mit den Schüttgutabzugsrohren 9A zur Deckung gebracht.

Die gleiche vereinfachte Schüttgutabzugsvorrichtung könnte auch bei der Ausführungsform gemäß Fig. 1 realisiert werden, nämlich wenn die Trichter oder Rinnen des (unteren) Anströmbodens 6B auf Lücke versetzt zu den Trichtern oder Rinnen des (oberen) Anströmbodens 6A angeordnet sind. Dann durchdringen die Schüttgutabzugsrohre 9A nicht den Kreuzungsbereich der Verteilelemente 8, sondern den Berührungsbereich benachbarter Trichter oder Rinnen. Diese alternative Möglichkeit ist in Fig. 4a unten rechts als Alternative gestrichelt dargestellt.

## Patentansprüche

1. Wanderbettreaktoranlage zum Behandeln von Fluiden mittels eines als Schüttgut vorliegenden Feststoffes, vorzugsweise im Gegenstromverfahren, bei dem wenigstens ein Schüttgut von oben nach unten wandert und wenigstens ein Fluid von unten nach oben strömt, bestehend aus mindestens zwei übereinander angeordneten Reaktionskammern mit
a) wenigstens einem Einlaß und wenigstens einem Auslaß je Reaktionskammer zum Durchsatz des Schüttgutes durch die Reaktionskammer
b) wenigstens einem weiteren Einlaß und wenigstens einem weiteren Auslaß je Reaktionskammer zum Durchsatz des Fluides durch das in der Reaktionskammer befindliche Schüttgut,
c) einem Boden, insbesondere Anströmboden, je Reaktionskammer zum Durchlassen des Schüttgutes nach unten und, vorzugsweise zum Verteilen des Fluides über den Querschnitt der Reaktionskammer, wobei jeder Boden aus rinnenförmigen, Schüttgutdurchlaßöffnungen aufweisenden Elementen gebildet ist, und
d) einem Schüttgutverteilboden je Reaktionskammer zum Verteilen des Schüttgutes über den Querschnitt der Reaktionskammer,
e) Mitteln zum Zu- und Abführen des wenigstens einen Schüttgutes sowie des wenigstens einen Fluides zu und von den Reaktionskammern, sowie aus
f) einem oder mehreren unterhalb des betreffenden Bodens angeordneten Schüttgutabzugsrohren oder -schächten zum Abziehen des Schüttgutes aus zumindest einer oberen Reaktionskammer,
**dadurch gekennzeichnet**, daß
nebeneinander in einer Reihe angeordnete Trichter (28 oder 29 oder 28 und 29) an zwei einander gegenüberliegenden Seiten mit gemeinsamen, eine Rinne bildenden Seitenwänden (11,12) versehen sind und daß zwischen den die Rinnenlängsrichtung bildenden Seitenwänden (11 oder 12 oder 11 und 12) Trichter bildende Seitenwände (13 oder 14 oder 13 und 14) angeordnet sind.

2. Wanderbettreaktoranlage nach Anspruch 1, dadurch gekennzeichnet, daß in den in Rinnenlängsrichtung sich erstreckenden gemeinsamen Seitenwänden (11 oder 12 oder 11 und 12) im Bereich zwischen seitlich benachbarten Trichtern Fluiddurchtrittsöffnungen (16,17) vorgesehen sind.

3. Wanderbettreaktoranlage nach Anspruch 1 oder 2, dadurch gekennzeichnet, daß innerhalb zumindest jeden oberen Trichters (29) oder jeder oberen Rinne mindestens eines der Anströmböden (6A,6B) dachförmige Verteilelemente (8) derart angeordnet sind, daß sie zumindest den zentralen, vorzugsweise den gesamten Flächenbereich der zugehörigen Schüttgutdurchlaßöffnung (7A,7B) dachähnlich überdecken, daß die Verteilelemente (8) zusammen mit den Seitenwänden (11,13) jedes Trichters oder jeder Rinne Schüttgutdurchtrittsöffnungen bilden und
daß die Verteilelemente (8) trichterinnenseitig bzw. rinneninnenseitig von den Seitenwänden (11,13) zum Trichterinneren bzw. zum Rinneninneren hin abstehen und über den Trichterumfang bzw. entlang der Rinne verteilt angeordnet sind, wobei vorzugsweise in den Trichter- oder Rinnenseitenwänden Fluiddurchtrittsöffnungen (15) angeordnet sind.

4. Wanderbettreaktoranlage nach einem der Ansprüche 1 bis 3, dadurch gekennzeichnet, daß unmittelbar unterhalb der oberen Trichter (29) oder Rinnen ein unterer Trichter (28) oder eine untere Rinne in fluchtender oder auf Lücke versetzter Anordnung vorgesehen ist.

5. Wanderbettreaktoranlage nach Anspruch 4, gekennzeichnet durch einen Zwischentrichter (30) oder eine Zwischenrinne zwischen den oberen Trichtern (29) oder den oberen Rinnen und den dazu auf Lücke versetzt darunter angeordneten unteren Trichtern (28) oder unteren Rinnen.

6. Wanderbettreaktoranlage insbesondere nach einem der Ansprüche 1 bis 5, dadurch gekennzeichnet, daß in einem Bereich zwischen den Schüttgutdurchlaßöffnungen (7A) eines oberen Anströmbodens (5A) und den Schüttgutabzugsrohren (9A) Auslaßöffnungen (42) oder Durchbrechungen (27) für Schüttgut von der Reaktionskammer (5A) oder einem Schüttgutbunker oberhalb des Anströmbodens (6A) in die Reaktionskammer (5B) unterhalb des Anströmbodens (6A) vorhanden sind.

7. Wanderbettreaktoranlage nach einem der Ansprüche 1 bis 6, dadurch gekennzeichnet, daß die Schüttgutabzugsrohre (9A) mit vertikalem Abstand unterhalb der Schüttgutdurchlaßöffnungen (7A) beginnen.

8. Wanderbettreaktoranlage nach Anspruch 7, dadurch gekennzeichnet, daß die Schüttguteintrittsmündung der Schüttgutabzugsrohre (9A) höhenverstellbar ist.

9. Wanderbettreaktoranlage nach Anspruch 7 oder 8, dadurch gekennzeichnet, daß der Bereich nahe der Schüttguteintrittsmündung der Schüttgutabzugsrohre (9A) nach oben querschnittserweitert ist.

10. Wanderbettreaktoranlage nach einem der Ansprüche 7 bis 9, dadurch gekennzeichnet, daß bei einem aus einem oder mehreren Trichtern oder Rinnen bestehenden Anströmboden (6A) die Schüttguteintrittsmündungen der Schüttgutabzugsrohre (9A) auf einer Umfangslinie einer fiktiven gradlinigen Verlängerung der Trichter- oder Rinnenseitenwände (11,13) liegt.

11. Wanderbettreaktoranlage nach einem der Ansprüche 7 bis 10, dadurch gekennzeichnet, daß bei einem aus einem oder mehreren Trichtern oder Rinnen bestehenden Anströmboden (6A) im Bereich der Schüttgutdurchlaßöffnungen (7A) mindestens eine Durchbrechung (27) oder partielle Verlängerung der Seitenwände (11,13) vorgesehen ist, so daß ein Teil des Schüttgutes bereits an einem höher gelegenen Punkt seitlich austreten kann und ein anderer Teil des Schüttgutes weiter nach unten geführt wird.

## Claims

1. A moving bed reactor installation for the treatment of fluids by means of a solid present as bulk material, preferably by the countercurrent method, wherein at least one bulk material travels downwards and at least one fluid flows upwards, comprising at least two reaction chambers arranged one above another and having
a) at least one inlet and at least one outlet per reaction chamber for the passage of the bulk material through the reaction chamber,
b) at least one further inlet and at least one further outlet per reaction chamber for the passage of the fluid through the bulk material in the reaction chamber,
c) one deck, in particular a flow-past deck, per reaction chamber for allowing the bulk material to pass downwards and preferably for distributing the fluid over the cross-sectional area of the reaction chamber, each deck being formed of channel-type members having discharge openings for the bulk material, and
d) one bulk material distribution deck per reaction chamber for distributing the bulk material over the cross-sectional area of the reaction chamber,
e) means for conveying the at least one bulk material and the at least one fluid into and out of the reaction chambers, and
f) one or more bulk material extraction pipes or shafts arranged below the relevant deck and provided for extracting the bulk material from at least one upper reaction chamber,
characterised in that funnels (28 or 29 or 28 and 29), arranged side by side in a row and on two opposing sides, are provided with common sidewalls (11, 12) forming a channel and in that sidewalls (13 or 14 or 13 and 14) forming funnels are arranged between the sidewalls (11 or 12 or 11 and 12) forming the lengthwise direction of the channel.

2. A moving bed reactor installation according to claim 1, characterised in that passage openings (16, 17) for the fluid are provided in the common sidewalls (11 or 12 or 11 and 12) extending in the longitudinal direction of the channel in the region between laterally adjacent funnels.

3. A moving bed reactor installation according to claim 1 or 2, characterised in that, inside at least each upper funnel (29) or each upper channel of at least one of the flow-past decks (6A, 6B), roof-shaped distribution members (8) are arranged in such a manner that they cover at least the central, preferably the entire area of the associated bulk material discharge opening (7A, 7B) in the manner of a roof, in that the distribution members (8) together with the sidewalls (11, 13) of each funnel or each channel form bulk material passage openings and in that the distribution members (8) project into the funnel interior or the channel interior from the sidewalls (11, 13) on the inside of the funnel or channel and are distributed over the periphery of the funnel or along the channel, fluid passage openings (15) preferably being arranged in the sidewalls of the funnel or channel.

4. A moving bed reactor installation according to any one of claims 1 to 3, characterised in that, directly below the upper funnels (29) or channels, a lower funnel (28) or a lower channel is provided in alignment therewith or in a staggered arrangement.

5. A moving bed reactor installation according to claim 4, characterised by an intermediate funnel (30) or an intermediate channel between the upper funnels (29) or the upper channels and the lower funnels (28) or lower channels additionally provided therebelow in a staggered arrangement.

6. A moving bed reactor installation, in particular according to any one of claims 1 to 5, characterised in that, in a region between the bulk material discharge openings (7A) of an upper flow-past deck (6A) and the bulk material extraction pipes (9A), outlet openings (42) or apertures (27) are provided for bulk material passing from the reaction chamber (5A) or a bulk material bin above the flow-past deck (6A) into the reaction chamber (5B) below the flow-past deck (6A).

7. A moving bed reactor installation according to any one of claims 1 to 6, characterised in that the bulk material extraction pipes (9A) begin at a vertical distance below the bulk material discharge openings (7A).

8. A moving bed reactor installation according to claim 7, characterised in that the bulk material intake mouth of the bulk material extraction pipes (9A) is vertically adjustable.

9. A moving bed reactor installation according to claim 7 or 8, characterised in that the cross-section of the region near the bulk material intake mouth of the bulk material extraction pipes (9A) widens upwards.

10. A moving bed reactor installation according to any one of claims 7 to 9, characterised in that, in the case of a flow-past deck (6A) comprising one or more funnels or channels, the bulk material intake mouths of the bulk material extraction pipes (9A) are located on a circumference of an imaginary linear extension of the funnel or channel sidewalls (11, 13).

11. A moving bed reactor installation according to any one of claims 7 to 10, characterised in that, in the case of a flow-past deck (6A) comprising one or more funnels or channels, at least one aperture (27) or partial extension of the sidewalls (11, 13) is provided in the region of the bulk material discharge openings (7A), with the result that one portion of the bulk material can issue laterally further up and another portion of the bulk material is conveyed further downwards.

## Revendications

1. Installation de réacteurs à lit mouvant pour le traitement de fluides au moyen d'une matière solide sous forme de produit en vrac, de préférence dans le procédé de contrecourant dans lequel une matière en vrac s'achemine de haut en bas et au moins un fluide s'écoule de bas en haut, cette installation se composant d'au moins deux chambres de réaction disposées l'une au-dessus de l'autre qui comprennent
a) au moins une entrée et au moins une sortie par chambre de réaction pour le passage de la matière en vrac à travers la chambre de réaction,
b) au moins une autre entrée et au moins une autre sortie par chambre de réaction pour le passage du fluide à travers la matière en vrac présente dans la chambre de réaction,
c) un fond, en particulier, des fonds d'écoulement par chambre de réaction pour le passage de la matière en vrac vers le bas et, de préférence, pour la répartition du fluide sur la section transversale de la chambre de réaction chaque fond étant constitué d'éléments présentant des orifices de passage de la matière en vrac en forme de rigole, et
d) un fond de répartition de la matière en vrac par chambre de réaction pour la répartition de la matière en vrac sur la section transversale de la chambre de réaction,
e) des moyens pour l'amenée et la décharge au moins d'une matière en vrac ainsi qu'au moins d'un fluide au niveau des chambres de réaction ainsi
f) qu'un ou plusieurs conduits ou puits de décharge de la matière en vrac disposés en dessous du fond concerné pour le retrait de la matière en vrac d'au moins une chambre de réaction supérieure,
caractérisée en ce que
des entonnoirs (28 ou 29 ou 28 et 29) disposés alignés les uns à côté des autres sont munis, sur deux côtés opposés, de parois latérales communes (11, 12) formant rigole et en ce qu'entre les parois latérales (11 ou 12 ou 11 et 12) formant la rigole dans le sens de la longueur, sont disposées des parois latérales (13 ou 14 ou 13 et 14) formant entonnoirs.

2. Installation de réacteurs à lit mouvant selon la revendication 1 caractérisée en ce que dans les parois latérales communes (11 ou 12 ou 11 et 12) s'étendant dans le sens longitudinal de la rigole il est prévu des orifices de passage du fluide (16, 17) dans la zone entre les entonnoirs voisins latéralement.

3. Installation de réacteurs à lit mouvant selon la revendication 1 ou 2, caractérisée en ce qu'à l'intérieur au moins de chaque entonnoir supérieur (29) ou de chaque rigole supérieure d'au moins un des fonds d'écoulement (6A, 6B) sont disposés des éléments formant toit (8) de façon qu'ils recouvrent, à la manière d'un toit, au moins la zone de surface centrale, de préférence totale, des orifices de passage correspondants (7A, 7B) de la matière en vrac, en ce que les éléments répartisseurs (8) forment en commun avec les parois latérales (11, 13) de chaque entonnoir ou de chaque rigole, des orifices de passage de la matière en vrac et
en ce que les éléments répartisseurs (8) font saillie, du côté interne des entonnoirs respectivement du côté interne des rigoles des parois latérales (11, 13) en direction de l'intérieur des entonnoirs respectivement en direction des rigoles et sont répartis sur la périphérie des entonnoirs respectivement le long des rigoles, de préférence des orifices de passage du fluide (15) étant disposés dans les parois latérales d'entonnoirs ou de rigoles.

4. Installation de réacteurs à lit mouvant selon l'une des revendications 1 à 3 caractérisée en ce que, juste en dessous des entonnoirs (29) ou rigoles supérieurs, il est prévu un entonnoir inférieur (28) ou une rigole inférieure de manière alignée ou en quinconce.

5. Installation de réacteurs à lit mouvant selon la revendication 4, caractérisée par un entonnoir intermédiaire (30) ou une rigole intermédiaire entre les entonnoirs supérieurs (29) ou les rigoles supérieures et les entonnoirs inférieurs (28) ou rigoles inférieures disposés en dessous en quinconce.

6. Installation de réacteurs à lit mouvant selon en particulier l'une des revendications 1 à 5 , caractérisée en ce que, dans une zone entre les orifices de passage de la matière en vrac (7A) d'un fond d'écoulement supérieur (5A) et les conduits de décharge de la matière en vrac (9A), il existe des orifices de sortie (42) ou des perçées (27) pour sortir la matière en vrac de la chambre de réaction (5A) ou d'un silo de matière en vrac en amont du fond d écoulement (6A) dans la chambre de réaction (5B) en dessous du fond d'écoulement (6A).

7. Installation de réacteurs à lit mouvant selon l'une des revendications 1 à 6, caractérisée en ce que les conduits de décharge de la matière en vrac (9A) commencent à distance verticale en aval des orifices de passage de la matière en vrac (7A).

8. Installation de réacteurs à lit mouvant selon la revendication 7, caractérisée en ce que l'embouchure d'entrée de la matière en vrac des conduits de décharge de la matière en vrac (9A) est réglable en hauteur.

9. Installation de réacteurs à lit mouvant selon la revendication 7 ou 8 caractérisée en ce que la zone proche de l'embouchure d'entrée de la matière en vrac des conduits de décharge de la matière en vrac (9A) est élargie vers le haut en section transversale.

10. Installation de réacteurs à lit mouvant selon l'une des revendications 7 à 9, caractérisée en ce que, dans un fond d'écoulement (6A) se composant d'un ou de plusieurs entonnoirs ou rigoles les embouchures d'entrée de la matière en vrac des conduits de décharge de la matière en vrac (9A) se trouvent sur une ligne périphérique d'un prolongement rectiligne fictif des parois latérales (11, 13) des rigoles ou entonnoirs.

11. Installation de réacteurs à lit mouvant selon l'une des revendications 7 à 10, caractérisée en ce que dans un fond d écoulement (6A) se composant d'un ou de plusieurs entonnoirs ou rigoles, il est prévu, dans la zone des orifices de passage de la matière en vrac (7A), au moins une perçée (27) ou un prolongement partiel des parois latérales (11, 13) pour qu'une partie de la matière en vrac puisse déjà sortir latéralement à un endroit situé plus haut et qu'une autre partie de la matière en vrac soit guidée plus loin vers le bas.
